# EUROPEAN PATENT SPECIFICATION

(11) **EP 3 933 003 B1**
(45) Date of publication and mention of the grant of the patent: **07.10.2026**
(21) Application number: 20766194.3
(22) Date of filing: 07.01.2020
(51) Int. Cl.: C09D 163/00, C08G 59/62, C08G 59/50, C09D 5/00, C09D 5/02, C09D 5/08, C09D 7/61

(54) **DUAL-COMPONENT AQUEOUS EPOXY RESIN PAINT**
WÄSSRIGE EPOXIDHARZFARBE MIT ZWEI KOMPONENTEN
PEINTURE À BASE DE RÉSINE ÉPOXY AQUEUSE À DEUX COMPOSANTS

(30) Priority: 01.03.2019 CN 201910154749
(43) Date of publication of application: 05.01.2022
(73) Proprietor: Sherwin-Williams (Guangdong) New Material Co., Ltd., Foshan, Guangdong 528306 (CN)
(72) Inventor: WANG, Luyi, Foshan, Guangdong 528306 (CN); KAI, Weihua, Foshan, Guangdong 528306 (CN); XIONG, Rong, Foshan, Guangdong 528306 (CN); XU, WanJun, Shanghai 200436 (CN)
(74) Representative: Novagraaf Group
(86) International application number: PCT/CN2020/070706
(87) International publication number: WO 2020/177486

(56) References cited:
- WO-A1-2011/118792
- WO-A1-2017/184514
- CN-A- 106 675 334
- CN-A- 107 304 325
- CN-A- 107 555 814
- CN-A- 107 974 172
- CN-A- 110 003 763
- JP-A- 2006 036 979
- US-A- 4 741 947

## Description

### TECHNICAL FIELD

The present invention relates to a two-component aqueous epoxy resin paint, and more specifically to a two-component aqueous epoxy resin paint with a balanced pot life and drying speed.

### BACKGROUND

Epoxy resin has a wide range of application in coating industry. It is well known that an epoxy resin-curing system (also known as two-component epoxy resin paint) after curing can obtain a coating having good adhesion to substrates, especially metals, and having high mechanical strength, good chemical resistance and corrosion resistance. Therefore, an epoxy resin paint is considered to be one of the most cost-effective coating compositions in practice.

With the increasing awareness of environmental protection, the development of aqueous epoxy resin paint has attracted more and more attention. At present, how to ensure that a two-component aqueous epoxy paint has a rapid drying and a long pot life at the same time is an industry problem that has been difficult to solve for a long time, and it has never been properly solved before. Compared with a solvent-borne epoxy paint, an aqueous epoxy paint has a shorter pot life, especially at higher application temperatures. For example, at a construction temperature of 40°C, pot life of the conventional two-component aqueous epoxy paints is usually only 1 hour, which severely limits use of the two-component aqueous epoxy paints in regions with higher temperatures (such as tropical region). It has been proposed to replace a fast-drying curing agent with a slow-drying curing agent to increase pot life of products by sacrificing fast-drying performance, but this solution cannot be applied to the actual formulation.
WO 2011/118792 A1 describes a water-based coating composition which comprises (A) an aqueous epoxy-derived polyamine resin that has one or more primary and/or secondary amino groups in the molecule, (B) a compound that has one or more (meth)acryloyl groups in the molecule, and (C) an alkoxysilane compound.
CN 106 675 334 A describes a safe type aqueous bicomponent epoxy primer containing as A component raw material 30-40 parts of aqueous epoxy resin latex and further components, and as B component raw material 50-60 parts of water-diluted polyamine addition product and a solvent.
WO 2017/184514 A1 describes a two-component epoxy resin paint including a) an epoxy resin component; and b) an amine component for curing the epoxy resin component. The amine component preferably includes i) at least one polyamide curing agent; and ii) at least one Mannich base curing agent.

Therefore, there is a need in the coating industry to a two-component aqueous epoxy resin paint with a balanced pot life and drying speed.

### SUMMARY

The present application provides a two-component aqueous epoxy resin paint, comprising: a) an aqueous epoxy resin emulsion comprising a low epoxy equivalent epoxy resin having an epoxy equivalent weight ranging from 400 to 700 g/eq and a high epoxy equivalent epoxy resin having an epoxy equivalent weight of greater than 800 g/eq, and b) a curing agent, wherein a weight ratio of the low epoxy equivalent epoxy resin to the high epoxy equivalent epoxy resin is in the range of 5:5 to 9:1; and wherein the aqueous epoxy resin emulsion is a stable emulsion.

In one embodiment, the inventive aqueous epoxy resin emulsion is formed by mixing a first emulsion comprising the low epoxy equivalent epoxy resin and a second emulsion comprising the high epoxy equivalent epoxy resin. Preferably, the first emulsion is a stable emulsion. More preferably, the first emulsion is a stable emulsion, and the second emulsion is also a stable emulsion.

It was surprisingly discovered by the inventors of the present invention that in the formulation of two-component aqueous epoxy resin paint, when the aqueous epoxy resin emulsion is stable and comprises a combination of a low epoxy equivalent epoxy resin and high epoxy equivalent epoxy with a specific weight ratio, the resulting two-component aqueous epoxy resin paint not only has a balanced pot life and drying performance, but also shows an excellent corrosion resistance.

Without wishing to be bound by any theory, it is speculated that the two-component aqueous epoxy resin paint of the present invention can achieve the above-mentioned effects for the following reasons. The inventors of the present invention pioneered to discover that unlike a solvent-borne epoxy resin paint, the pot life of an aqueous epoxy resin paint is not only affected by crosslinking reaction between epoxy group of an epoxy resin and a curing agent, but also affected by demulsification of the aqueous epoxy resin emulsion which is also an important factor. The aqueous epoxy resin emulsion does not demulsify during the pot life, making it possible that the two-component aqueous epoxy resin paint formed therefrom has an acceptable pot life, for example, a pot life at 40°C of 2 hours or more. Moreover, according to an embodiment of the present invention, the aqueous epoxy resin emulsion contains a combination of a low epoxy equivalent epoxy resin and a high epoxy equivalent epoxy resin in which the high epoxy equivalent epoxy resin provides an initial sanding property for epoxy paint film and the low epoxy equivalent epoxy resin provides a certain crosslinking degree for epoxy resin paint film, so that the two-component epoxy resin paint formed therefrom has a suitable drying performance. Further, according to an embodiment of the present invention, the aqueous epoxy resin emulsion contains a combination of a low epoxy equivalent epoxy resin and a high epoxy equivalent epoxy resin in a specific ratio, and the proportion of the low epoxy equivalent epoxy resin is higher. Therefore, the paint film formed from the two-component epoxy resin paint has an ideal crosslinking density and shows excellent corrosion resistance.

Therefore, the present invention provides a two-component aqueous epoxy resin paint with a balanced long pot life and fast drying speed, and the coating formed from the paint has an excellent corrosion resistance.

The details of one or more embodiments of the present disclosure are set forth in the description below. Other features, objects, and advantages of the present disclosure will be apparent from the description, and from the claims.

### DESCRIPTION FOR DRAWINGS

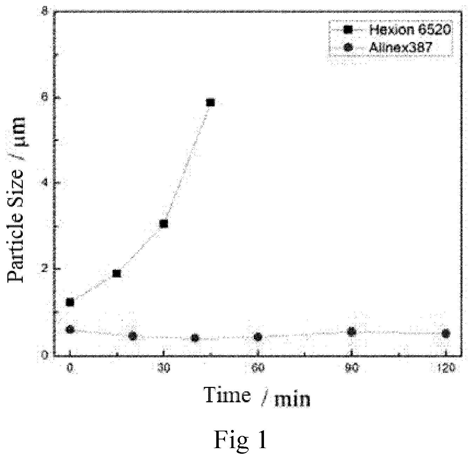

Fig. 1 shows curves of particle size of different types of epoxy resin emulsions after mixing with a curing agent with time at 40°C.

### DEFINITION

As used herein, "a", "an", "the", "at least one", and "one or more" are used interchangeably. Thus, for example, a composition that comprises "an" additive can be interpreted to mean that the composition includes "one or more" additives.

Throughout the present disclosure, where compositions are described as having, including, or comprising specific components or fractions, or where processes are described as having, including, or comprising specific process steps, it is contemplated that the compositions or processes as disclosed herein may further comprise other components or fractions or steps, whether or not, specifically mentioned in this disclosure, as along as such components or steps do not affect the basic and novel characteristics of the present disclosure, but it is also contemplated that the compositions or processes may consist essentially of, or consist of, the recited components or steps.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

When used herein, the term "epoxy equivalent weight" refers to the mass of epoxy resin containing 1 mol of epoxy groups. Generally, the lower the epoxy equivalent weight, the more epoxy groups contained in the epoxy resin is, and the higher the reactivity is. In an embodiment of the present invention, epoxy equivalent weight of the epoxy resin is usually provided by suppliers.

When used for an aqueous epoxy resin emulsion, a first emulsion containing a low epoxy equivalent epoxy resin, and a second emulsion containing a high epoxy equivalent epoxy resin, the term "stable" means that after the emulsion and a curing agent are mixed in an equivalent ratio of 1:0.8 and the resulting mixture is stored at 40°C for 2 hours, particle size of the emulsion does not exceed twice its initial particle size.

When used for a two-component aqueous epoxy paint, the term "pot life" refers to the time it takes for the viscosity of the system obtained by mixing two components of the epoxy resin paint to reach twice the initial viscosity of the system at a temperature of 40°C.

When used for a two-component aqueous epoxy paint, the term "initial sanding property" is a parameter used to measure drying performance of the two-component aqueous epoxy resin paint. Generally, the higher the initial sanding property, the better drying performance of the paint film is.

When used herein, the term "primer" refers to a coating composition that can be applied to a metal substrate and dried, crosslinked, or otherwise hardened to form a non-sticky continuous film having sufficient adhesion to the surface of substrate.

When used herein, the term "topcoat" refers to a coating composition that can be applied to a primer and dried, crosslinked, or otherwise hardened to form a decorative or protective outermost finish. Further, such topcoat can withstand long-term outdoor exposure without showing visible and unsatisfactory deterioration.

When used herein, the term "intermediate paint" refers to a coating composition that can be applied between a primer and a topcoat and dried, crosslinked or otherwise hardened to form one or more non-tacky continuous films between the primer and the topcoat.

When used herein, the term "direct-to-metal coating (DTM)" refers to a coating composition that can be applied to a metal substrate and dried, crosslinked, or otherwise hardened to form a non-sticky continuous film that has sufficient adhesion on the surface of substrate, and can withstand long-term outdoor exposure without showing visible and unsatisfactory deterioration.

The term "comprises", "comprising", "contains" and variations thereof do not have a limiting meaning where these terms appear in the description and claims.

The terms "preferred" and "preferably" refer to embodiments of the present disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the present disclosure.

### DETAILED DESCRIPTION

The present application provides a two-component aqueous epoxy resin paint, comprising: a) an aqueous epoxy resin emulsion comprising a low epoxy equivalent epoxy resin having an epoxy equivalent weight ranging from 400 to 700 g/eq and a high epoxy equivalent epoxy resin having an epoxy equivalent weight of greater than 800 g/eq, and b) a curing agent, wherein a weight ratio of the low epoxy equivalent epoxy resin to the high epoxy equivalent epoxy resin is in the range of 5:5 to 9:1; and wherein the aqueous epoxy resin emulsion is a stable emulsion.

### Aqueous epoxy resin emulsion

In the present invention, the aqueous epoxy resin emulsion refers to a resin composition that constitutes a main body of the coating formed from the two-component aqueous epoxy resin paint of the present invention, and the aqueous epoxy resin emulsion is a stable emulsion. In the context of the present invention, "stable" means that after the emulsion and a curing agent are mixed in an equivalent ratio of 1:0.8 and the resulting mixture is stored at 40°C for 2 hours, particle size of the emulsion does not exceed twice its initial particle size.

Pot life of aqueous epoxy resin paint is one of the important factors that determine its application value. So far, there has been no recognition in the paint industry that unlike a solvent-borne epoxy resin paint, the pot life of an aqueous epoxy resin paint is not only affected by crosslinking reaction between epoxy group of an epoxy resin and a curing agent, but also affected by demulsification of the aqueous epoxy resin emulsion which is also an important factor. The inventors of the present invention pioneered to discover that using a stable aqueous epoxy resin emulsion, a two-component water-based epoxy paint with an acceptable pot life can be successfully formulated, such as, with a pot life at 40°C of 2 hours or longer, for example 3 hours or longer.

According to the present invention, the aqueous epoxy resin emulsion comprises a low epoxy equivalent epoxy resin with an epoxy equivalent weight between 400-700 g/eq and a high epoxy equivalent epoxy resin with an epoxy equivalent weight of greater than 800 g/eq, wherein the weight ratio of the low epoxy equivalent epoxy resin to the high epoxy equivalent epoxy resin is in the range of 5:5 to 9:1.

The term "epoxy resin" as used herein refers to a polymer or oligomer containing two or more epoxy groups in one molecule. Preferably, the epoxy resin contains at most four epoxy groups in one molecule. More preferably, the epoxy resin contains two or three epoxy groups in one molecule. According to some embodiments of the present invention, the epoxy resin may have an epoxy equivalent varying over a wide range, wherein the epoxy equivalent is the mass of an epoxy resin containing 1 mole of epoxy group. The epoxy resin used in the invention comprises a low epoxy equivalent epoxy resin and a high epoxy equivalent epoxy resin. As used herein, the epoxy resin having an epoxy equivalent between 400 and 700g/eq, preferably between 450 and 550 g/eq is known as a low epoxy equivalent epoxy resin. The epoxy resin having a higher epoxy equivalent, such as having an epoxy equivalent greater than 800 g/eq, is known as a high epoxy equivalent epoxy resin. Preferably, the high epoxy equivalent epoxy resin may have an epoxy equivalent in the range of 900 g/eq to 2500 g/eq. In some embodiments, the high epoxy equivalent epoxy resin may have an epoxy equivalent in the range of 850 g/eq to 1200 g/eq. In some embodiments, the high epoxy equivalent epoxy resin may have an epoxy equivalent in the range of 1400 g/eq to 2500 g/eq, for example, in the range of 1600 to 1800 g/eq, or in the range of 1700 to 2200 g/eq.

According to some embodiments of the present invention, the high epoxy equivalent epoxy resin contained in the aqueous epoxy resin emulsion can obtain a significantly increased glass transition temperature after being mixed with a curing agent, so that the paint film has a better initial sanding property (i.e. initial hardness), thereby rendering the two-component epoxy paint formed therefrom to have a suitable drying performance. Preferably, according to some embodiments of the present invention, the high epoxy equivalent epoxy resin will form a crosslinked epoxy resin with a glass transition temperature of 50° C or higher, preferably a crosslinked epoxy resin with a glass transition temperature of 55° C or higher, more preferably a crosslinked epoxy resin with a glass transition temperature of 60° C or higher and even more preferably a crosslinked epoxy resin with a glass transition temperature of 70° C or higher after being mixed with the curing agent.

According to some embodiments of the present invention, the low epoxy equivalent epoxy resin contained in the aqueous epoxy resin emulsion can provide a sufficient degree of crosslinking, so that the paint film of the two-component epoxy resin paint formed therefrom has an ideal crosslink density. Therefore, in the formulation of two-component epoxy resin paint, the low epoxy equivalent epoxy resin is also an important component.

Suitable epoxy resin comprises, for example diglycidyl ether of polyhydric phenol, such as diglycidyl ether of resorcinol, diglycidyl ether of catechol, diglycidyl ether of hydroquinone, diglycidyl ether of bisphenol A, diglycidyl ether of bisphenol F, diglycidyl ether of bisphenol S, diglycidyl ether of tetramethyl bisphenol; diglycidyl ether of polyalcohol, such as diglycidyl ether of aliphatic diglycol and diglycidyl ether of polyether glycol, for example diglycidyl ether of C₂₋₂₄ alkylene glycol, diglycidyl ether of poly(ethylene oxide) glycol or diglycidyl ether of poly(propylene oxide) glycol; or polyglycidyl ether of novolack resin, such as polyglycidyl ether of phenol-formaldehyde resin, polyglycidyl ether of alkyl substituted phenol-formaldehyde resin, polyglycidyl ether of phenol-hydroxyl benzaldehyde resin, or polyglycidyl ether of cresol-hydroxyl benzaldehyde resin; or the combination thereof.

According to some embodiments of the present disclosure, any one of the low epoxy equivalent epoxy resin and the high epoxy equivalent epoxy resin is a diglycidyl ether of polyhydric phenol, especially preferably having the structure of formula (I): 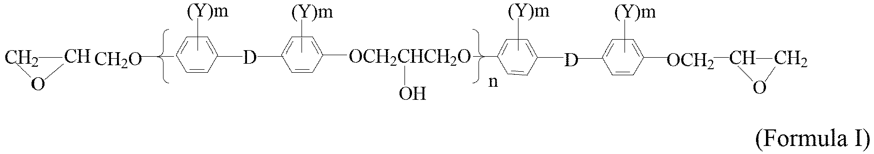 wherein
D each represents -S-, -S-S-, -SO-, -SO₂-. -CO₂-, -CO-, -O- or C₁ to C₁₀ alkylene, preferably C₁ to C₅ alkylene, more preferably C₁ to C₃ alkylene, such as -CH₂- or -C(CH₃)₂-,
Y each independently represents halogen, such as F, Cl, Br, or I, or optionally substituted monovalent C₁ to C₁₀ hydrocarbon group, such as optionally substituted methyl, ethyl, vinyl, propyl, allyl or butyl;
m each independently represents 0, 1, 2, 3 or 4, and
n represents an integer from 0 to 4, such as 0, 1, 2, 3 or 4.

More preferably, any one of the low epoxy equivalent epoxy resin and the high epoxy equivalent epoxy resin is bisphenol A epoxy resin, bisphenol S epoxy resin or bisphenol F epoxy resin having the structure of formula (I) in which D represents -C(CH₃)₂-, -SO₂- or -CH₂- respectively, m represents 0, and n represents an integer from 0 to 4.

Most preferably, any one of the low epoxy equivalent epoxy resin and the high epoxy equivalent epoxy resin is bisphenol A epoxy resin having the structure of formula (I) in which D represents -C(CH₃)₂-, m represents 0, and n represents an integer from 0 to 4.

The epoxy resin as disclosed herein may be prepared by the epichlorohydrin technology which is well-known by those skilled in the art, for example. Alternatively, as an example of epoxy resin, any suitable commercial product may be used, for example E55, E51, E44, or E20 available from Kaiping Resin Company, Shanghai, China.

According to the present application, the above mentioned epoxy resin is used for providing a resin component for the aqueous epoxy resin emulsion. In one aspect, the resin component functions as a binder which provides adhesion to a substrate, and holds together other components, such as fillers, of the epoxy resin paint to impart basic cohesive strength to the paint film formed from the epoxy resin paint of the present disclosure. In the other aspect, the resin component has good reactivity with a curing agent, thereby providing a coating having high mechanical strength.

In the aqueous epoxy resin emulsion according to the present invention, the weight ratio of the low epoxy equivalent epoxy resin to the high epoxy equivalent epoxy resin can be varied within a certain range. Preferably, compared to the weight of the high epoxy equivalent epoxy resin contained in the aqueous epoxy resin emulsion, the low epoxy equivalent epoxy resin is present in a higher weight percentage. The weight ratio of the low epoxy equivalent epoxy resin to the high epoxy equivalent epoxy resin is in the range of 5:5 to 9: 1, preferably in the range of 5:5 to 8:2. The inventors of the present invention surprisingly found that the paint film of the two-component epoxy resin paint formulated by the above ratio has an ideal crosslinking density and exhibits an excellent corrosion resistance.

According to some embodiments of the present invention, the aqueous epoxy resin emulsion further comprises a reactive emulsifier, an optional film-forming aid, and an aqueous medium, wherein the reactive emulsifier is an adduct formed by the addition of an epoxy resin, such as an epoxy resin having an epoxy equivalent of less than 600g/eq and a nonionic surfactant. The inventors of the present invention surprisingly found that the aqueous epoxy resin emulsion with the above composition is stable during the pot life and its particle size at 40°C can be kept unchanged for a relatively long period of time, such as 2 hours, 3 hours, 4 hours or longer after being mixed with a curing agent,

According to an embodiment of the present invention, the reactive emulsifier is an adduct formed by the addition of an epoxy resin, such as an epoxy resin having an epoxy equivalent of less than 600 g/eq, and a nonionic surfactant. As an exemplary illustration, the reactive emulsifier can be prepared by appropriate polyaddition reactions known to those of ordinary skill in the art. For example, in the presence of a catalyst, the polymerization reaction of polyethylene glycol and epoxy resin such as E-20 occurs in water to form a reactive emulsifier. The catalyst is preferably a Lewis acid, more preferably an anionic Lewis acid, and most preferably comprises tin tetrachloride, boron trifluoride, methyl persulfate or triphenylphosphine. The catalyst is preferably added in the form of a solution, and the solvent for the catalyst solution is preferably an ether solvent, more preferably ethylene glycol monoethyl ether. The raw materials, ratio, reaction conditions, etc. of the above-mentioned synthesis reaction can be determined by those skilled in the art based on their experience. Alternatively, the above-mentioned reactive emulsifier may be any suitable commercially available product as an example, for example, the EP series aqueous epoxy resin from Allnex, USA.

According to an embodiment of the present invention, the film-forming aid is a reagent used to assist the film formation of epoxy resin, including but not limited to alcohol ethers, such as propylene glycol monomethyl ether, propylene glycol monobutyl ether, ethylene glycol monopropyl ether, propylene glycol monophenyl ether. If necessary, other film-forming aids can also be used. As examples of other film-forming aids, any appropriate commercially available products, such as Texanol, Lusolvan FBH, Coasol, DBE-IB, DPnB, Dowanol PPh, Dowanol PM, alcohol ester 12, and the like, can be used. If necessary, the above-mentioned film-forming aids can be present in the aqueous epoxy resin emulsion, or can be added to the aqueous epoxy resin paint according to the present invention to promote the formation of paint film.

According to an embodiment of the present invention, any suitable aqueous medium may be used to prepare the aqueous epoxy resin emulsion of the present invention. Suitable aqueous media include water-soluble organic solvents, water and mixtures thereof.

In a currently preferred embodiment, the aqueous epoxy resin emulsion is formed by mixing a first emulsion containing the low epoxy equivalent epoxy resin and a second emulsion containing the high epoxy equivalent epoxy resin. Preferably, the first emulsion is a stable emulsion. More preferably, the first emulsion is a stable emulsion, and the second emulsion is also a stable emulsion.

As an example of the first emulsion, any suitable commercially available product can be used, such as Allnex 387 from Allnex Corporation. Preferably, the first emulsion has a solid content of 40-60 wt%.

As an example of the second emulsion, any suitable commercially available product can be used, such as 3907 from Huntsman, 900 and 1600 from Nanya. Preferably, the second emulsion has a solid content of 40-60 wt%.

Preferably, the aqueous epoxy resin emulsion contains about 10% to about 70% by weight, preferably about 10% to 60% by weight, more preferably about 25% to about 55% by weight, still more preferably about 30% to about 50% by weight of the combination of the first emulsion and the second emulsion, relative to the total weight of the aqueous epoxy resin emulsion. Specifically, the aqueous epoxy resin emulsion, relative to the total weight of the aqueous epoxy resin emulsion, contains about 30% by weight, about 35% by weight, about 40% by weight, about 45% by weight, about 48% by weight, or about 50% by weight of the combination of the first emulsion and the second emulsion.

A suitable aqueous epoxy resin emulsion may further contain fillers. The term "filler" as used herein refers to any volume extender suitable for the aqueous epoxy resin emulsions, which may be inorganic, for example, in the form of particles. There is no particular limitation on the shape of particles, and they can have any appropriate shape. The average particle size of the filler can vary within a wide range, for example, within a range of about 10 nanometers to about 50 microns. Some fillers, in addition to functioning as volume extenders, also impart one or more desired properties to the composition and/or the coating formed from the composition. For example, some fillers can improve chemical and/or physical properties, especially mechanical properties of the coating obtained from the composition. In this case, this filler is also called "reinforcing filler".

In an embodiment of the present invention, the fillers contain, for example, silicate, sulfate, carbonate, and silica. Suitable exemplary fillers include, for example, kaolin, wollastonite, calcium carbonate, diatomaceous earth, talc, barium sulfate, magnesium aluminum silicate, silica, and any combination thereof.

According to certain embodiments of the present invention, the total amount of fillers can vary within a wide range, for example, the total amount thereof is in the range of about 0% to about 40% by weight relative to the total weight of the aqueous epoxy resin emulsion, It is preferably in the range of about 10% by weight to about 30% by weight, more preferably in the range of about 10% by weight to 25% by weight.

According to an embodiment of the present invention, the aqueous epoxy resin emulsion may further include commonly used additional additives. Suitable additional additives may include wetting and dispersing agents, defoamers, leveling agents, rust inhibitors, film forming aids, rheology modifiers, pigments, aqueous solvents, or any combination thereof.

Suitable wetting and dispersing agents may include ionic wetting and dispersing agents, non-ionic wetting and dispersing agents, or multifunctional wetting and dispersing agents. As examples of commercially available wetting and dispersing agents, Dispers 715 W, Dispers 740W, Dispers 760W, and Disperbyk 194 available from Tego, Germany can be used.

Suitable defoamers include organosiloxane defoamers, polyether defoamers, polyether modified silicone defoamers, or any combination thereof. As examples of commercially available defoamers, BYK 024, BYK-1660, BYK037, available from BYK, Germany, and TEGO foamex 810, available from EVONIK, can be used.

Suitable rheology modifiers (i.e. thickeners) include polyurethane thickeners, cellulose ether thickeners, or any combination thereof. As an example of a polyurethane thickener, RM-8W thickener available from Rohm & Hass, USA can be used. As an example of a cellulose ether thickener, Bermocoll EBS 451 FQ available from Akzo Noble, the Netherlands can be used.

Suitable leveling agents include polysiloxane leveling agents, polyacrylic leveling agents or any combination thereof. As an example of a commercially available leveling agent, 1660 and BYK420 purchased from BYK, Germany can be used.

As used herein, "rust inhibitor" is an agent that can prevent corrosion of metal substrates. As an example of a rust inhibitor, any suitable commercially available product may be used, such as a flash rust inhibitor Additive F2M commercially available from Hightac; sodium nitrite or a combination thereof.

Depending on desired coating color, the aqueous epoxy resin emulsion may include pigments. Suitable pigments may include one or more of iron oxide, carbon black, lead oxide, lead carbonate, zinc oxide, titanium oxide, deep ocean blue, chrome green, or chromium oxide, or a combination thereof. In a preferred embodiment of the present invention, titanium oxide is used as a pigment.

If necessary, the film-forming aids described in the aqueous epoxy resin emulsion can be used to promote the formation of paint film, and the type of the film-forming aids is not particularly limited.

The content of each optional ingredient is sufficient to achieve its intended purpose, but preferably, such content does not adversely affect the coating composition or the cured coating obtained therefrom. According to certain embodiments of the present invention, the total amount of the additional additives is in the range of about 0% to about 60% by weight, preferably in the range of about 0.1% to about 55% by weight, relative to the total weight of the aqueous epoxy resin emulsion.

The preparation of the aqueous epoxy resin emulsion of the present invention may be achieved by any suitable mixing method known to those of ordinary skill in the art. For example, an aqueous epoxy resin emulsion can be made by adding the combination of the first emulsion and the second emulsion, fillers, and additional additives (if any) to a container, and then stirring the resulting mixture uniformly.

### Curing agent

According to some embodiments of the present invention, the curing agent used to cure the aqueous epoxy resin emulsion comprises one or more curing agents selected from an aliphatic polyamine, a fatty amine adduct, an amidoamine, an amino polyamide resin, a cycloaliphatic amine, an aromatic amine, an arylamine, a Mannich base, a ketimine, and a dicyandiamide or combinations thereof.

According to some embodiments of the present invention, the curing agent is well-known in the art, for example it is disclosed in "Paint Technology" edited by Liu Dengliang, fourth edition, 2010, No. 275-280.

According to some embodiments of the present invention, the weight ratio of the curing agent to the aqueous epoxy resin emulsion may be varied in the range of 8:100 to 20:100. Generally, when the weight ratio of the curing agent to the aqueous epoxy resin emulsion is less than 8:100, the curing performance of the resulting coating is poor. Generally, when the weight ratio of the curing agent to the aqueous epoxy resin emulsion is greater than 20:100, the operating performance of the resulting epoxy resin paint and/or the mechanical properties of the resulting coating may decrease. According to actual needs, an additional inert diluent that will not affect reactivity of the curing agent and the aqueous epoxy resin emulsion can be added during the preparation of the curing agent and/or the aqueous epoxy resin emulsion, so as to reduce the components' viscosity. Therefore, the weight ratio of the curing agent to the aqueous epoxy resin emulsion is not limited to the above range, and can be adjusted according to actual needs.

According to some embodiments of the present invention, the two-component aqueous epoxy resin paint can be prepared as follows. Before application, the aqueous epoxy resin emulsion and the curing agent are simply mixed in a mixing device in a predetermined weight ratio. The mixed epoxy paint can be applied using various methods familiar to those skilled in the art, including spraying (for example, air-assisted, airless or electrostatic spraying), brushing, roller coating, overflow coating, and dipping. In one embodiment of the present invention, the mixed epoxy resin paint is applied by spraying. Epoxy resin paint can be applied as to various wet film thicknesses. In an embodiment of the present invention, the epoxy resin paint is applied in such a wet film thickness that it may preferably provide a dry film thickness of about 13 to about 260 µm (about 0.5 to about 10 mils), and more preferably about 25 to about 75 µm (about 1 to about 3 mils). The applied coating can be cured by air-drying or by using various drying devices (for example, an oven) familiar to those skilled in the art to accelerate the curing. The preferred heating temperature for curing epoxy resin paint is from about 60°C to about 100°C, and more preferably from about 60°C to about 80°C, and the preferred heating time is from at least three minutes to less than 60 minutes, to less than 45 minutes, or to less than 40 minutes. The heating time will tend to decrease with increasing temperature or increasing airflow.

The present invention is more particularly described in the following examples that are intended as illustrations only, since numerous modifications and variations within the scope of the present disclosure will be apparent to those skilled in the art. Unless otherwise noted, all parts, percentages, and ratios reported in the following examples are on a weight basis, and all reagents used in the examples are commercially available and used directly without further treatment.

### Test Methods

### Pot Life

The two components of the aqueous epoxy resin paint of the present invention were mixed together, which was set standing at 40±1°C, and then the resulting mixture was measured with a 4# cup for its viscosity in seconds (s).

### Glass transition temperature

The emulsion was centrifuged at a speed of 12000 r/s for 10 minutes to demulsify and was separated. The lower solid was taken out, dried with N₂, and then subjected to a DSC test (at 10°C /min from -20°C to 150 °C) in which the inflection point of the DSC curve is determined as to be Tg.

### Initial sanding property

The two components of the aqueous epoxy resin paint of the present invention were mixed to form a paint film, and the paint film was dried and taken out of an oven. The resulting paint film was immediately polished with 600 grit sandpaper to determine its initial sanding property. The sanding property was rated to a total of five grades of 1-5, in which grade 5 was the best, with no paint film being adhered on sandpaper; grade 4 was second best, with a small lump being adhered on sandpaper; grade 3 is third best, with a small amount of medium-sized lump being adhered on sandpaper; grade 2 is a worse level than grade 3 with a large amount of medium-sized lump being adhered on sandpaper; and grade 1 was the worst with a large amount of large lump being adhered on sandpaper.

**Adhesion** was measured according to the test standard of ASTM D3359.

**Impact resistance** was measured according to the Chinese national standard of GB 1732.

### Examples

The raw materials used in each example were listed in Table 1 below.

**Table 1**

| Items | Materials | Description |
|---|---|---|
| 1 | Allnex 387 (EEW480-550) | Low epoxy equivalent epoxy resin emulsion |
| 2 | Hexion 6520 (EEW500-600) | Low epoxy equivalent epoxy resin emulsion |
| 3 | Huntsman 3907(EEW 1760-2200) | High epoxy equivalent epoxy resin emulsion |
| 4 | NanYa 900(EEW 850-1000) | High epoxy equivalent epoxy resin emulsion |
| 5 | NanYa1600(EEW1600-1800) | High epoxy equivalent epoxy resin emulsion |
| 6 | Disperbyk 194 | Wetting and dispersing agent |
| 7 | BYK 037 | Defoamer |
| 8 | BYK420 | Leveling agent |
| 9 | Additive F2M | Rust inhibitor |
| 10 | Deionized water | Aqueous medium |
| 12 | TiO₂ | pigment |
| 13 | Rheology modifier | Rheology modifier |
| 14 | Dowanol PM | Film forming aids |
| 15 | Sodium nitrite | Rust inhibitor |

### Determination of a first emulsion

At room temperature, the commercially available epoxy emulsions Allnex 387 and Hexion 6520 were mixed with the curing agent, and then the obtained mixture was detected by a dynamic light scattering for its particle size change with time at 40° C. The test results were shown in Figure 1.

As can be shown from the results, the particle size of Allnex 387 remained stable, while the particle size of Hexion 6520 rapidly increased in less than 1 hour so that the emulsion broke. Therefore, Allnex 387 was a stable emulsion, which would be used as the first emulsion to formulate a two-component aqueous epoxy resin paint.

### Determination of a second emulsion

At room temperature, the commercially available epoxy emulsions Allnex 387, Huntsman 3907, NanYa 900 and Nanya 1600 were mixed with the curing agent respectively, and the resulting mixture was determined according to the test method for their glass transition temperature. The results were shown in Table 2 below.

**Table 2:**

| | Allnex 387 | Huntsman 3907 | NanYa900 | NanYa 1600 |
|---|---|---|---|---|
| EEW/g/eq | 480-550 | 1760-2200 | 850-1000 | 1600-1800 |
| Tg/°C | 6.7 | 32.2 | 7.5 | 14.3 |
| Tg/°C after mixing with curing agent | 14.5 | 74.5 | 60.9 | 59.1 |

As shown from the above results, the epoxy resin emulsions with a high epoxy equivalent (such as Huntsman 3907, NanYa 900 and Nanya 1600) had significantly increased Tg after being mixed with a curing agent. These high epoxy equivalent epoxy resin would form a crosslinked epoxy resin with a Tg of greater than 50°C after being mixed with a curing agent, and a higher Tg would provide a better initial hardness. Therefore, Huntsman 3907, NanYa900 and NanYa1600 were considered as the second emulsion that was suitable for the formulation of the two-component aqueous epoxy paint.

### Two-component coating composition

As shown in Table 3, Allnex 387 and NY1600 were mixed in a ratio of 8:2, and then the resulting emulsion was mixed with the components shown in Table 3 to form an aqueous epoxy resin emulsion as component A. Then, the obtained component A and the component B as a curing agent were mixed to form a two-component aqueous epoxy resin paint according to Example 1 of the present invention. The two-component aqueous epoxy resin paint of Example 2 was prepared according to the same method with the exception that Allnex387 and NY1600 were mixed in a ratio of 7:3.

For comparison, the epoxy resin emulsion Hexion 6520 was also mixed with the components shown in Table 3 below to form an aqueous epoxy resin emulsion as component A. Then, the obtained component A and the component B as a curing agent were mixed to form a two-component waterborne epoxy resin paint of the comparative example 1 for comparison.

Then, the pot life, adhesion, sanding property and impact resistance of the two-component aqueous epoxy resin paints of Example 1, Example 2 and Comparative Example 1 were tested, and the results were shown in Table 3.

**Table 3**

| | | | **Example** | **Example 2** | **Comparative Example 1** |
|---|---|---|---|---|---|
| Component A | Allnex387 | | 38.7 parts by weight (PBW) | 33.9 PBW | - |
| | Nanya1600 | | 9.7 PBW | 14.5 PBW | - |
| | Hexion6520 | | - | - | 48.4 PBW |
| | Disperbyk 194 | | 3.8 PBW | 3.8 PBW | 3.8 PBW |
| | BYK 037 | | 1.9 PBW | 1.9 PBW | 1.9 PBW |
| | BYK420 | | 6.5 PBW | 6.5 PBW | 6.5 PBW |
| | Additive F2M | | 11.3 PBW | 11.3 PBW | 11.3 PBW |
| | Deionized water | | 11.3 PBW | 11.3 PBW | 11.3 PBW |
| | TiO₂ | | 15.7 PBW | 15.7 PBW | 15.7 PBW |
| | Rheology modifier | | 0.4 PBW | 0.4 PBW | 0.4 PBW |
| | Dowanol PM | | 0.5 PBW | 0.5 PBW | 0.5 PBW |
| | Sodium nitrite | | 0.2 PBW | 0.2 PBW | 0.2 PBW |
| Component B | Curing agent Huntsman3987 | | 13.8 PBW | 13.1 PBW | 15 PBW |
| Properties | Pot life (40°C, 4#viscisoity ) | 0h | 23.8s | 25.5s | 28.1s |
| | | 1h | - | - | 98.2s |
| | | 2h | 24.6s | 26.8s | - |
| | Adhesion | | 5 | 5 | 5 |
| | Initial sanding property | | 5- | 5- | 4 |
| | Impact resistance (cm) | | 45 | 45 | 40 |

As shown from the above results, the pot life of the two-component coating formed by mixing different epoxy emulsions with different epoxy equivalents was up to 2h at 40°C, and the viscosity did not change much with time; while the viscosity of the comparative example 1 increased 3 times within only 1 hour. In addition, the adhesion, sanding property and impact resistance of the two-component coating formed by mixing different epoxy emulsions are comparable to those of the comparative example 1. Thus, the water-based epoxy resin paint according to the embodiment of the present invention was determined to have a balanced pot life and drying speed.

## Claims

1. A two-component aqueous epoxy resin paint comprising:
a) an aqueous epoxy resin emulsion comprising a low epoxy equivalent epoxy resin having an epoxy equivalent weight ranging from 400 to 700 g/eq and a high epoxy equivalent epoxy resin having an epoxy equivalent weight of greater than 800 g/eq, and
b) a curing agent,
wherein a weight ratio of the low epoxy equivalent epoxy resin to the high epoxy equivalent epoxy resin is in the range of 5:5 to 9:1; and
wherein the aqueous epoxy resin emulsion is a stable emulsion;
wherein the term "stable" means that after the emulsion and a curing agent are mixed in an equivalent ratio of 1:0.8 and the resulting mixture is stored at 40°C for 2 hours, the particle size of the emulsion does not exceed twice its initial particle size.

2. The two-component aqueous epoxy resin paint according to claim 1, wherein the high epoxy equivalent epoxy resin has an epoxy equivalent weight in the range of from 900 g/eq to 2500 g/eq.

3. The two-component aqueous epoxy resin paint according to claim 1, wherein any one of the low epoxy equivalent epoxy resin and the high epoxy equivalent epoxy resin is a diglycidyl ether of polyhydric phenol of formula (I): 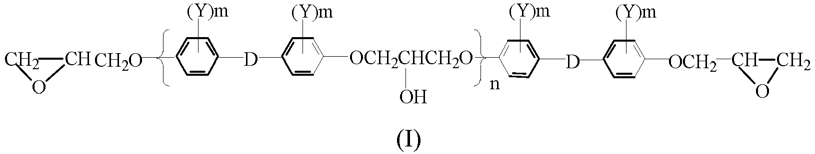 wherein
D each represents a divalent C₁-C₁₀ alkylene,
Y each independently represents hydrogen, halogen or an optionally substituted monovalent C₁ to C₁₀ hydrocarbon group,
m each independently represents 0, 1, 2, 3 or 4, and
n represents an integer from 0 to 4.

4. The two-component aqueous epoxy resin paint according to claim 1, wherein the aqueous epoxy resin emulsion further comprises: a reactive emulsifier, an optional coalescent agent; and an aqueous medium, wherein the reactive emulsifier is an adduct formed by the addition of an epoxy resin and a nonionic surfactant.

5. The two-component aqueous epoxy resin paint according to claim 1, wherein the aqueous epoxy resin emulsion is formed by mixing a first emulsion comprising the low epoxy equivalent epoxy resin and a second emulsion comprising the high epoxy equivalent epoxy resin.

6. The two-component aqueous epoxy resin paint of claim 5, wherein the first emulsion is a stable emulsion, wherein the term "stable" means that after the emulsion and a curing agent are mixed in an equivalent ratio of 1:0.8 and the resulting mixture is stored at 40°C for 2 hours, the particle size of the emulsion does not exceed twice its initial particle size.

7. The two-component aqueous epoxy resin paint according to claim 5, wherein the first emulsion has a solid content of 40 to 60 % by weight.

8. The two-component aqueous epoxy resin paint of claim 5, wherein the second emulsion is a stable emulsion, wherein the term "stable" means that after the emulsion and a curing agent are mixed in an equivalent ratio of 1:0.8 and the resulting mixture is stored at 40°C for 2 hours, the particle size of the emulsion does not exceed twice its initial particle size.

9. The two-component aqueous epoxy resin paint according to claim 5, wherein the second emulsion has a solid content of 40 to 60 % by weight.

10. The two-component aqueous epoxy resin paint according to claim 5, wherein the aqueous epoxy resin emulsion comprises, relative to the total weight of the aqueous epoxy resin emulsion,
10-70 % by weight of the combination of the first emulsion and the second emulsion;
0-30 % by weight of fillers;
0-60 wt% of an additional additive comprising a wetting dispersant, an antifoaming agent, a leveling agent, a rust inhibitor, a coalescent agent, a rheology modifier, an aqueous solvent, a pigment, or any combination thereof.

11. The two-component aqueous epoxy resin paint according to claim 1, wherein the curing agent comprises an aliphatic polyamine, a fatty amine adduct, an amidoamine, an amino polyamide resin, a cycloaliphatic amine, an aromatic amine, an arylamine, a Mannich base, a ketimine, and a dicyandiamide or combinations thereof.

12. The two-component aqueous epoxy resin paint according to claim 1, wherein the aqueous epoxy resin emulsion after being mixed with the curing agent exhibits a pot life of at least 2 hours at 40 °C, wherein the pot life is determined according to the method outlined in the description.

13. The two-component aqueous epoxy resin paint according to any one of claims 1 to 12, which is suitable for use as a primer, a topcoat, an intermediate coat or a primer topcoat syncretic coating.

## Patentansprüche

1. Wässriger Zweikomponenten-Epoxidharzlack, umfassend:
a) eine wässrige Epoxidharzemulsion, umfassend ein Epoxidharz mit niedrigem Epoxidäquivalent, das ein Epoxidäquivalentgewicht in einem Bereich von 400 bis 700 g/eq aufweist, und ein Epoxidharz mit hohem Epoxidäquivalent, das ein Epoxidäquivalentgewicht von mehr als 800 g/eq aufweist, und
b) ein Härtungsmittel,
wobei ein Gewichtsverhältnis des Epoxidharzes mit niedrigem Epoxidäquivalent zu dem Epoxidharz mit hohem Epoxidäquivalent in einem Bereich von 5 : 5 bis 9 : 1 liegt; und
wobei die wässrige Epoxidharzemulsion eine stabile Emulsion ist;
wobei der Begriff "stabil" bedeutet, dass, nachdem die Emulsion und ein Härtungsmittel in einem Äquivalentverhältnis von 1 : 0,8 gemischt werden und die resultierende Mischung 2 Stunden lang bei 40 °C gelagert wird, die Partikelgröße der Emulsion das Zweifache ihrer anfänglichen Partikelgröße nicht überschreitet.

2. Wässriger Zweikomponenten-Epoxidharzlack nach Anspruch 1, wobei das Epoxidharz mit hohem Epoxidäquivalent ein Epoxidäquivalentgewicht in einem Bereich von 900 g/eq bis 2500 g/eq aufweist.

3. Wässriger Zweikomponenten-Epoxidharzlack nach Anspruch 1, wobei ein beliebiges von dem Epoxidharz mit niedrigem Epoxidäquivalent und dem Epoxidharz mit hohem Epoxidäquivalent ein Diglycidylether von mehrwertigem Phenol der Formel (I) ist: 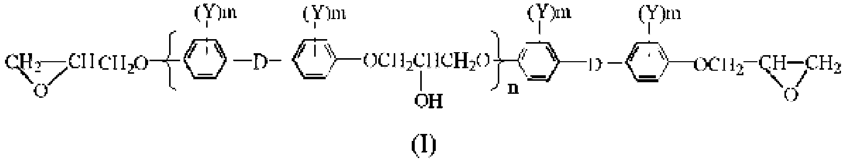 wobei
D jeweils ein zweiwertiges C₁-C₁₀-Alkylen darstellt,
Y jeweils unabhängig Wasserstoff, Halogen oder eine optional substituierte einwertige C₁ bis C₁₀-Kohlenwasserstoffgruppe darstellt,
m jeweils unabhängig 0, 1, 2, 3 oder 4 darstellt, und
n eine ganze Zahl von 0 bis 4 darstellt.

4. Wässriger Zweikomponenten-Epoxidharzlack nach Anspruch 1, wobei die wässrige Epoxidharzemulsion ferner umfasst: einen reaktiven Emulgator, ein optionales Koaleszenzmittel; und ein wässriges Medium, wobei der reaktive Emulgator ein Addukt, das durch die Addition eines Epoxidharzes und eines nichtionischen Tensids ausgebildet wird, ist.

5. Wässriger Zweikomponenten-Epoxidharzlack nach Anspruch 1, wobei die wässrige Epoxidharzemulsion durch Mischen einer ersten Emulsion, umfassend das Epoxidharz mit niedrigem Epoxidäquivalent, und einer zweiten Emulsion, umfassend das Epoxidharz mit hohem Epoxidäquivalent, ausgebildet wird.

6. Wässriger Zweikomponenten-Epoxidharzlack nach Anspruch 5, wobei die erste Emulsion eine stabile Emulsion ist, wobei der Begriff "stabil" bedeutet, dass, nachdem die Emulsion und ein Härtungsmittel in einem Äquivalentverhältnis von 1 : 0,8 gemischt werden und die resultierende Mischung 2 Stunden lang bei 40 °C gelagert wird, die Partikelgröße der Emulsion das Zweifache ihrer anfänglichen Partikelgröße nicht überschreitet.

7. Wässriger Zweikomponenten-Epoxidharzlack nach Anspruch 5, wobei die erste Emulsion einen Feststoffgehalt von 40 bis 60 Gew.-% aufweist.

8. Wässriger Zweikomponenten-Epoxidharzlack nach Anspruch 5, wobei die zweite Emulsion eine stabile Emulsion ist, wobei der Begriff "stabil" bedeutet, dass, nachdem die Emulsion und ein Härtungsmittel in einem Äquivalentverhältnis von 1 : 0,8 gemischt werden und die resultierende Mischung 2 Stunden lang bei 40 °C gelagert wird, die Partikelgröße der Emulsion das Zweifache ihrer anfänglichen Partikelgröße nicht überschreitet.

9. Wässriger Zweikomponenten-Epoxidharzlack nach Anspruch 5, wobei die zweite Emulsion einen Feststoffgehalt von 40 bis 60 Gew.-% aufweist.

10. Wässriger Zweikomponenten-Epoxidharzlack nach Anspruch 5, wobei die wässrige Epoxidharzemulsion umfasst, relativ zu dem Gesamtgewicht der wässrigen Epoxidharzemulsion,
zu 10-70 Gew.-% die Kombination der ersten Emulsion und der zweiten Emulsion;
zu 0-30 Gew.-% Füllstoffe;
zu 0-60 Gew.-% ein zusätzliches Additiv, umfassend ein Netz- und Dispergiermittel, ein Antischaummittel, ein Verlaufsmittel, ein Rostschutzmittel, ein Koaleszenzmittel, einen Rheologiemodifikator, ein wässriges Lösungsmittel, ein Pigment oder eine beliebige Kombination davon.

11. Wässriger Zweikomponenten-Epoxidharzlack nach Anspruch 1, wobei das Härtungsmittel ein aliphatisches Polyamin, ein Fettaminaddukt, ein Amidoamin, ein Aminopolyamidharz, ein cycloaliphatisches Amin, ein aromatisches Amin, ein Arylamin, eine Mannich-Base, ein Ketimin und ein Dicyandiamid oder Kombinationen davon umfasst.

12. Wässriger Zweikomponenten-Epoxidharzlack nach Anspruch 1, wobei die wässrige Epoxidharzemulsion nach dem Mischen mit dem Härtungsmittel eine Topfzeit von mindestens 2 Stunden bei 40 °C vorweist, wobei die Topfzeit nach dem in der Beschreibung dargelegten Verfahren bestimmt wird.

13. Wässriger Zweikomponenten-Epoxidharzlack nach einem der Ansprüche 1 bis 12, der zur Verwendung als eine Grundierung, eine Deckschicht, eine Zwischenbeschichtung oder eine synkretische Grundierungsdeckschichtbeschichtung geeignet ist.

## Revendications

1. Peinture aqueuse de résine époxy à deux composants, comprenant :
a) une émulsion aqueuse de résine époxy comprenant une résine époxy à faible équivalent époxy ayant un poids d'équivalent époxy allant de 400 à 700 g/eq et une résine époxy à équivalent époxy élevé ayant un poids d'équivalent époxy supérieur à 800 g/eq, et
b) un agent de durcissement,
dans laquelle un rapport en poids de la résine époxy à faible équivalent époxy à la résine époxy à équivalent époxy élevé est dans la plage de 5:5 à 9:1 ; et
dans laquelle l'émulsion aqueuse de résine époxy est une émulsion stable ;
dans laquelle le terme « stable » signifie qu'après le mélange de l'émulsion et d'un agent de durcissement selon un rapport équivalent de 1:0,8 et le stockage du mélange résultant à 40 °C pendant 2 heures, la taille de particule de l'émulsion ne dépasse pas le double de sa taille de particule initiale.

2. Peinture aqueuse de résine époxy à deux composants selon la revendication 1, dans laquelle la résine époxy à équivalent époxy élevé a un poids d'équivalent époxy compris dans la plage allant de 900 g/eq à 2500 g/eq.

3. Peinture aqueuse de résine époxy à deux composants selon la revendication 1, dans laquelle l'une quelconque parmi la résine époxy à faible équivalent époxy et la résine époxy à équivalent époxy élevé est un éther diglycidylique de phénol polyhydrique de formule (I) : 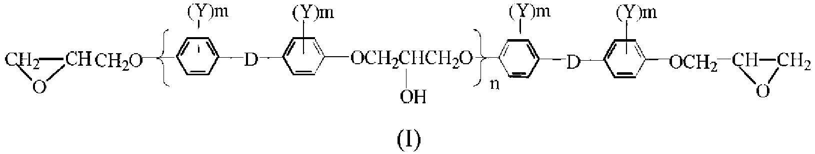 où
chaque D représente un alkylène divalent en C₁-C₁₀,
Y représente chacun indépendamment hydrogène, halogène ou un groupe d'hydrocarbures monovalent C₁-C₁₀ éventuellement substitué,
m représente indépendamment 0, 1, 2, 3 ou 4, et
n représente un nombre entier allant de 0 à 4.

4. Peinture aqueuse de résine époxy à deux composants selon la revendication 1, dans laquelle l'émulsion aqueuse de résine époxy comprend en outre : un émulsifiant réactif, un agent de coalescence facultatif ; et un milieu aqueux, dans laquelle l'émulsifiant réactif est un adduit formé par addition d'une résine époxy et d'un agent tensioactif non ionique.

5. Peinture aqueuse de résine époxy à deux composants selon la revendication 1, dans laquelle l'émulsion aqueuse de résine époxy est formée par le mélange d'une première émulsion comprenant la résine époxy à faible équivalent époxy et d'une seconde émulsion comprenant la résine époxy à équivalent époxy élevé.

6. Peinture aqueuse de résine époxy à deux composants selon la revendication 5, dans laquelle la première émulsion est une émulsion stable, dans laquelle le terme « stable » signifie qu'après le mélange de l'émulsion et d'un agent de durcissement dans un rapport équivalent de 1:0,8 et le stockage du mélange résultant à 40 °C pendant 2 heures, la taille de particule de l'émulsion ne dépasse pas deux fois sa taille de particule initiale.

7. Peinture aqueuse de résine époxy à deux composants selon la revendication 5, dans laquelle la première émulsion a une teneur en matières solides de 40 à 60 % en poids.

8. Peinture aqueuse de résine époxy à deux composants selon la revendication 5, dans laquelle la seconde émulsion est une émulsion stable, dans laquelle le terme « stable » signifie qu'après le mélange de l'émulsion et d'un agent de durcissement dans un rapport équivalent de 1:0,8 et le stockage du mélange résultant 40 °C pendant 2 heures, la taille de particule de l'émulsion ne dépasse pas deux fois sa taille de particule initiale.

9. Peinture aqueuse de résine époxy à deux composants selon la revendication 5, dans laquelle la seconde émulsion a une teneur en matières solides de 40 à 60 % en poids.

10. Peinture aqueuse de résine époxy à deux composants selon la revendication 5, dans laquelle l'émulsion aqueuse de résine époxy comprend, par rapport au poids total de l'émulsion aqueuse de résine époxy,
de 10 à 70 % en poids de la combinaison de la première émulsion et de la seconde émulsion ;
de 0 à 30 % en poids de charges ;
de 0 à 60 % en poids d'un additif supplémentaire comprenant un dispersant mouillant, un agent antimousse, un agent fluidifiant, un inhibiteur de rouille, un agent de coalescence, un modificateur de rhéologie, un solvant aqueux, un pigment, ou toute combinaison de ceux-ci.

11. Peinture aqueuse de résine époxy à deux composants selon la revendication 1, dans laquelle l'agent de durcissement comprend une polyamine aliphatique, un adduit d'amine grasse, une amidoamine, une résine polyamide amine, une amine cycloaliphatique, une amine aromatique, une arylamine, une base de Mannich, une kétimine et un dicyandiamide, ou des combinaisons de ceux-ci.

12. Peinture aqueuse de résine époxy à deux composants selon la revendication 1, dans laquelle l'émulsion aqueuse de résine époxy après avoir été mélangée avec l'agent de durcissement présente une durée de vie en pot d'au moins 2 heures à 40 °C, dans laquelle la durée de vie en pot est déterminée selon le procédé décrit dans la description.

13. Peinture aqueuse de résine époxy à deux composants selon l'une quelconque des revendications 1 à 12, qui est appropriée pour une utilisation en tant qu'apprêt, couche de finition, couche intermédiaire ou revêtement syncrétique de couche de finition d'apprêt.
